# EUROPEAN PATENT APPLICATION

(11) **EP 3 912 751 A1**
(43) Date of publication of application: **24.11.2021**
(21) Application number: 20794399.4
(22) Date of filing: 26.02.2020
(51) Int. Cl.: B22F 3/02, B28B 1/24, B29C 33/40, B29C 45/26

(54) **CORE RESIN**

(30) Priority: 26.04.2019 JP 2019084977
(71) Applicant: SEKISUI CHEMICAL CO., LTD., Osaka-shi Osaka 530-8565 (JP)
(72) Inventor: CHITOU, Takahisa, Chita-gun, Aichi 470-2102 (JP)
(74) Representative: Ter Meer Steinmeister & Partner
(86) International application number: PCT/JP2020/007735
(87) International publication number: WO 2020/217695

(57) **Abstract**

Provided is a resin for core used for injection molding, with which an inner surface of an outer molded body is less likely to be roughened, and an inner surface of a finally obtained molded body is smooth and less likely to have chipping. The resin for core includes a polyvinyl alcohol-based resin, used for an application in which a core is dissolved in water after an outer molded body is molded in an injection molding process, and includes an easy stripping agent that enhances easy stripping properties when the resin for core dissolves in a proportion of more than 0.1 wt% and less than 1.2 wt%.

## Description

### TECHNICAL FIELD

The present invention relates to a resin for core used in injection molding, and particularly relates to a resin for core used for an application for dissolving a core in water after an outer molded body is molded.

### BACKGROUND ART

It has been conventionally known to use a resin for core made of a water-soluble resin to obtain a molded body having a complicated inner surface by injection molding. For example, Patent Document 1 below describes that acrylic, polystyrene, polyacetal, and a mixture thereof are desirable as materials of the resin for core. Patent Document 2 below takes polyvinyl alcohol-based, polyacrylamide-based, and polyacrylic acid-based water-soluble resins as examples of the water-soluble resin.

### Related Art Document

### Patent Document

Patent Document 1: JP H4-179501 A
Patent Document 2: JP 2014-34707 A

### SUMMARY OF THE INVENTION

### PROBLEMS TO BE SOLVED BY THE INVENTION

Patent Document 1 and Patent Document 2 merely describe that a wide range of resins as water-soluble resins are used. However, when a core is actually dissolved in water, an outer molded body may be affected when the water-soluble resin is dissolved. For example, when the outer molded body is a molded body made of a metal powder for sintering, a part of the outer molded body may be broken or chipped due to a volume change of the water-soluble resin. In addition, after the resin for core is stripped off from the inner surface of the resin for core, cracks may occur on the inner surface of the outer molded body. Because of this, when the outer molded body is a molded body of a metal powder for sintering for example, the surface smoothness of the inner surface of the sintered body obtained after final sintering may deteriorate. The inner surface of the sintered body may also be chipped.

In addition, in a mold, the core may not be able to keep its shape due to the heat at the time of molding the outer molded body by injection molding.

An object of the present invention is to provide a water-soluble resin for core used in injection molding, with which an inner surface of an outer molded body is less likely to be roughened, and an inner surface of a finally obtained outer molded body is smooth and less likely to have chipping.

### MEANS FOR SOLVING THE PROBLEM

The present invention is a resin for core including a polyvinyl alcohol-based resin, used for an application in which a core is dissolved in water after an outer molded body is molded in an injection molding process, the resin for core including an easy stripping agent that enhances easy stripping properties when the resin for core dissolves, in a proportion of more than 0.1 wt% and less than 1.2 wt%.

In the resin for core according to the present invention, the resin for core preferably includes a plasticizer in a proportion of 6.0 wt% or less. In this case, a molded body having a complicated shape can be more reliably molded.

In the resin for core according to the present invention, at least one selected from the group including ethylene glycol, glycerin, diglycerin, and trimethylolpropane is preferably used as the plasticizer. In this case, the moldability of the outer molded body can be further enhanced.

In the resin for core according to the present invention, a glycerin fatty acid ester-based compound is preferably used as the easy stripping agent. In this case, the inner surface of the molded body is further less likely to be roughened.

In the resin for core according to the present invention, the polyvinyl alcohol-based resin preferably has a polymerization degree of 800 or less. In this case, the resin for core does not change its volume when dissolving in water, and the shape of the exterior can be maintained.

In the resin for core according to the present invention, an aqueous solution of the polyvinyl alcohol-based resin having a concentration of 4 wt% at 23°C preferably has a viscosity of 100 mPa or less. In this case, the water solubility is further enhanced.

In the resin for core according to the present invention, the polyvinyl alcohol-based resin preferably has an MFR of 1.0 g or more and 10.0 g or less at 210°C under a load of 2160 g. In this case, the core surface after injection molding can be smoothed.

In the resin for core according to the present invention, a material of the outer molded body is a metal powder for sintering, and the polyvinyl alcohol-based resin has a saponification degree of 72% or more and 90% or less. In this case, molding can be performed at a relatively low temperature, and roughness of the inner surface of the outer molded body can be more effectively suppressed.

### EFFECT OF THE INVENTION

With the resin for core according to the present invention, the inner surface of the outer molded body is less likely to be roughened during injection molding, and thus surface smoothness of the inner surface of the finally obtained molded body can be improved, and the inner surface is less likely to have chipping.

### BRIEF DESCRIPTION OF DRAWINGS

[Fig. 1] Figs. 1 (a) and 1 (b) are a front cross-sectional view and a right side view to explain a step of disposing a core in a forming mold and molding an outer molded body in an injection molding method using a resin for core according to one embodiment of the present invention.
[Fig. 2] Fig. 2 is a schematic front cross-sectional view to explain a step of dissolving the resin for core in water solubility in an injection molding method using the resin for core of the present invention.
[Fig. 3] Figs. 3 (a) and 3 (b) are a front cross-sectional view and a perspective view showing a tubular body made of a sintered body which is a final product obtained by an injection molding method using a resin for core according to one embodiment of the present invention.

### MODES FOR CARRYING OUT THE INVENTION

Hereinafter, the present invention will be clarified by describing specific embodiments of the present invention with reference to the drawings.

As a result of intensive studies on the resin for core, the inventors of the present application have paid attention to the fact that it is only required to enhance the stripping properties of the resin for core from the inner surface of the molded body in order to suppress the deterioration of the surface smoothness of the inner surface of the molded body and keep the inner surface from partially chipping, and have found that the above object can be achieved by including an easy stripping agent in the resin for core.

That is, the present invention is a resin for core including a polyvinyl alcohol-based resin, the resin for core including an easy stripping agent that enhances easy stripping properties when the resin for core dissolves in water in a proportion of more than 0.1 wt% and less than 1.2 wt%. The resin for core according to the present invention preferably includes a plasticizer in a proportion of 6.0 wt% or less of the entire resin for core. In this case, a molded body having a complicated shape can be more reliably molded.

As the polyvinyl alcohol-based resin, polyvinyl alcohol is suitably used, but impurities such as other water-soluble resins may be contained as long as the object of the present invention is not interfered.

The polymerization degree of the polyvinyl alcohol-based resin is 800 or less. When the polymerization degree is 800 or less, the resin for core does not change its volume when dissolving in water and can maintain the shape of the exterior, and it is possible to improve the surface smoothness of the inner surface of the product formed of the finally obtained outer molded body. When a plurality of polyvinyl alcohol-based resins are used in combination, the average polymerization degree needs to be 800 or less as the polymerization degree. For example, the average polymerization degree may be determined by N1 × W1 + N2 × W2/(W1 + W2), wherein N1 is the polymerization degree of a first polyvinyl alcohol-based resin, W1 is the content ratio of the first polyvinyl alcohol-based resin, N2 is the polymerization degree of a second polyvinyl alcohol-based resin, and W2 is the content ratio of the second polyvinyl alcohol-based resin.

In addition, the viscosity of an aqueous solution of the polyvinyl alcohol-based resin at a concentration of 4 wt% at 23°C is preferably 10 cps or less. In this case, the resin for core can be dissolved more quickly to obtain a molded body having an inner surface further excellent in surface smoothness.

The viscosity is measured by a method in accordance with JIS-K-6276.

The polyvinyl alcohol-based resin has an MFR of 1.0 g or more and 10.0 g or less at 210°C under a load of 2160 g. Having the easy stripping agent within this range can more effectively keep the inner surface of the obtained molded body from being roughened, can further improve the surface smoothness of the inner surface of the finally obtained product, and makes the inner surface less likely to have chipping.

In the present invention, the polyvinyl alcohol-based resin used for the resin for core may be only one kind or a mixture of a plurality of kinds of polyvinyl alcohol-based resins.

When the material of the outer molded body is a metal powder for sintering, the saponification degree of the polyvinyl alcohol-based resin is preferably 72% or more and 90% or less. In this case, the shape of the core is further less likely to deteriorate due to the heat at the time of molding the outer molded body. Therefore, a molded body having a desired shape can be easily obtained. In addition, because the resin for core is excellent in solubility in water, the influence of the volume change of the resin for core is less likely to occur when it dissolves in water. Therefore, the inner surface of the molded body are further less likely to be roughened and chipped.

The easy stripping agent used in the present invention is added to enhance easy stripping properties when the core dissolves in water. In this case, when the content ratio of the easy stripping agent is 0.1 wt% or less of the entire resin for core, the inner surface of the molded body cannot be sufficiently kept from being roughened, and the inner surface of the obtained product has insufficient surface smoothness or is partially chipped.

More preferably, the content ratio of the easy stripping agent is 0.3 wt% or more and 1.0 wt% or less of the entire resin for core.

As the easy stripping agent, various materials that enhance the easy stripping properties can be used. Preferably, a glycerin fatty acid ester-based compound is used as the easy stripping agent. Examples of the glycerin fatty acid ester-based compound include monoglyceride stearate, monoglyceride oleate, and diglyceride laurate, as glyceryl monostearate. Examples of such an easy stripping agent include, as glyceryl monostearate, products such as "Electrostripper TS5" manufactured by Kao Corporation and "Rikemal S-100A" manufactured by Riken Vitamin Co., Ltd. Examples of glyceryl monooleate include products such as "Rikemal OL100(E)" manufactured by Riken Vitamin Co., Ltd.

As the plasticizer, a known material can be used as long as moldability of the molding material can be improved. As the plasticizer, at least one selected from the group including ethylene glycol, glycerin, diglycerin, and trimethylolpropane is preferably used. In that case, moldability can be further enhanced.

The plasticizer is preferably added in a proportion of 6.0 wt% or less of the entire resin for core. This can more effectively keep the inner surface of the molded body from being roughened while improving the moldability.

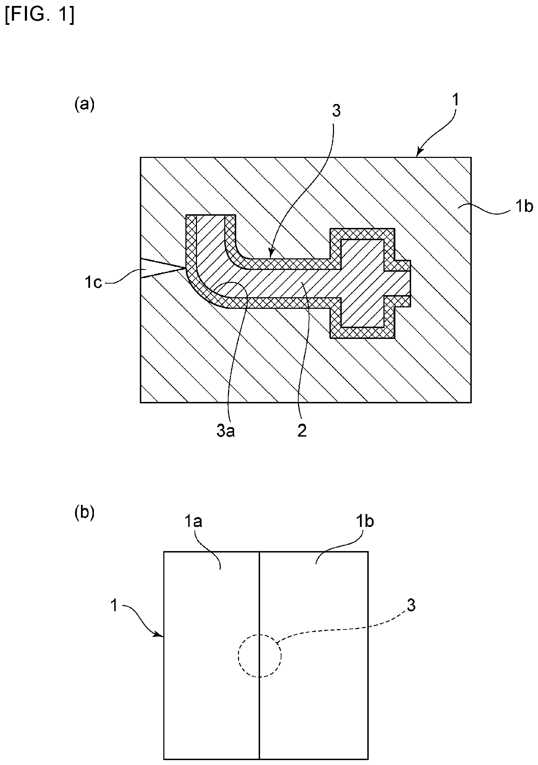

The resin for core used in the injection molding process according to the present invention is used in an injection molding method including a step of molding an outer molded body and then dissolving the resin for core in water. An injection molding method according to one embodiment of the present invention will be described with reference to Figs. 1 to 3. The resin for core is not particularly limited as long as it is used in such an injection molding method.

As shown in Figs. 1(a) and 1(b), a mold 1 in which split molds 1a and 1b are combined is prepared. The split molds 1a and 1b of the mold 1 are opened, and a core 2 is disposed in a recessed portion which is a molding portion of the split mold 1a or 1b. In this state, the mold 1 is closed. Then, a molding material to form an outer molded body is injected from an injection port 1c. The molding material is not particularly limited. In the present embodiment, a material containing a metal powder for sintering and a binder resin is used. In this way, an outer molded body 3 is formed as shown by the schematic cross-sectional view of Fig. 1(a).

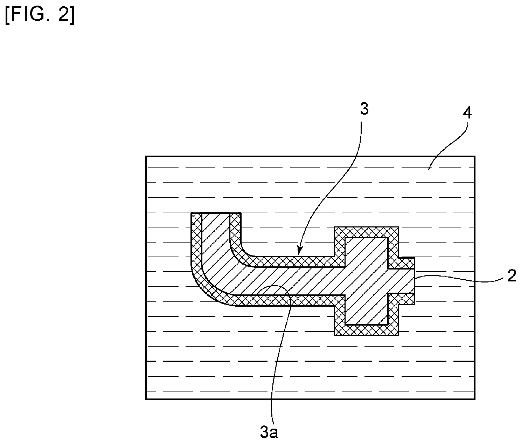

Next, the mold 1 is opened, and the structure in which the core 2 and the outer molded body 3 are integrated is taken out and immersed in water 4 as shown in Fig. 2. Because the core 2 is water-soluble, the core 2 dissolves by being immersed in the water 4. Next, the outer molded body 3 is taken out from the water 4.

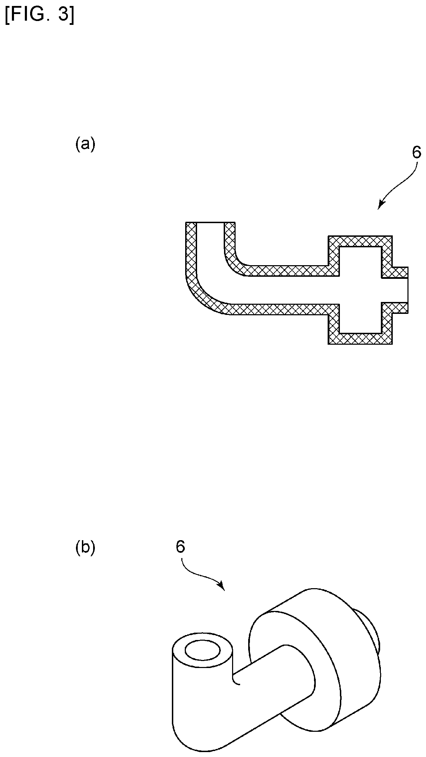

In the present embodiment, the molding material is made of a material containing a metal powder for sintering and a binder resin as described above. Next, the molded body 3 is heated and sintered. In this way, a tubular body 6 shown in Figs. 3(a) and 3(b) is obtained. The tubular body 6 is made of sintered metal obtained by sintering a metal powder for sintering.

In the injection molding method, the core 2 is excellent in water solubility because the core 2 is made of the resin for core of the present invention, and the inner surface 3a of the molded body 3, that is, the stripped surface from which the core 2 is stripped off, is less likely to be roughened in a state after the molded body 3 is taken out from the water 4. In addition, the inner surface 3a is less likely to have partial chipping.

Therefore, in the finally obtained tubular body 6, the surface smoothness of the inner surface is effectively enhanced, and the inner surface is less likely to have partial chipping.

As described above, when the outer molding material is a metal powder for sintering, the saponification degree of the polyvinyl alcohol-based resin of the resin for core that forms the core 2 is preferably 72% or more and 90% or less. In this case, deterioration of the shape of the core 2 due to heat during molding of the outer molded body 3 hardly occurs. In addition, even when a metal powder for sintering that can be molded at a low temperature is used, deterioration of the shape of the core 2 hardly occurs.

The molding method using the core 2 made of the resin for core of the present invention is not limited to the method for obtaining the molded body 3 or the tubular body 6 having the specific shape illustrated in Figs. 1 to 3.

The molding material of the molded body 3 is not limited to the metal powder for sintering, and may be another molding material. That is, the molding material may be for example a molding material including a ceramic powder and a binder. The molding material may also include a water-insoluble resin material.

The metal powder for sintering is not limited to particular metals, and various metals can be used. For example, in the case of obtaining a tubular body for conveying a liquid such as water or a fluid such as various gases, a stainless-steel powder or a titanium powder is suitably used as the metal powder for sintering. A powder of a metal such as iron, aluminum, or copper or an alloy powder may also be used.

The binder used together with the metal powder for sintering is not particularly limited, and various synthetic resins such as polyethylene, vinyl acetate, and polypropylene, and binders such as cellulose and carboxymethyl cellulose can be used.

Hereinafter, the present invention will be clarified by giving Examples and Comparative Examples of the present invention.

The present invention is not limited to the following Examples.

### (Example 1)

The following polyvinyl alcohol, antioxidant, and easy stripping agent were used.
1) Polyvinyl alcohol: Product name "SELVOL 205" manufactured by Sekisui Specialty Chemicals America, LLC., saponification degree 89%, polymerization degree 500 to 800.
2) Antioxidant: Products names "Irganoc 3114" and "Irgafos 168" manufactured by BASF SE were used in combination. The added ratio was 0.2% of the entire resin for core.
3) Easy stripping agent: Product name "Electrostripper TS5", which is commercially available glyceryl monostearate as an antistatic agent manufactured by Kao Corporation, was added in a proportion of 0.3 wt% of the entire resin for core.

The antioxidant and the easy stripping agent were added to the polyvinyl alcohol, and pelletized at an extrusion temperature of 190°C to 210°C using a processing device, product number "TEM26SX " manufactured by Toshiba Machine Co., Ltd., to obtain a pellet.

A core was molded from the obtained pellet by a molding apparatus "J30ADS" manufactured by The Japan Steel Works, Ltd. With the same molding apparatus, the core was disposed in a mold, a stainless-steel clay for sintering containing a stainless-steel powder for sintering and a binder composed of polyethylene was disposed along the outer periphery of the core, the mold was closed, and molding was performed at a temperature of 180°C to 200°C.

Next, the composite including the core and the outer molded body was taken out from the mold and immersed in warm water of 60°C. The core was dissolved taking about 6 hours while the water was stirred. The remaining outer molded body was heated at a temperature of 1300°C for 60 seconds and sintered to obtain a tubular body on stainless steel.

No chipping was observed on the inner surface of the stainless-steel tubular body obtained as described above, and the surface of the inner surface had a smooth quality and was in a very good state.

### (Example 2)

A pellet was obtained in the same manner as in Example 1 except that the easy stripping agent was changed to product name "Rikemal OL100" which is a commercially available glyceryl monooleate manufactured by Riken Vitamin Co., Ltd. In the same manner as in Example 1, a core was formed from the obtained pellet, and an outer molded body was obtained. The core was dissolved in water, and the outer molded body was sintered to obtain a tubular body as a final sintered body.

In Example 2 as well, no chipping was observed on the inner surface of the finally obtained tubular body made of stainless steel, and the surface quality of the inner surface was smooth and good, but it was inferior to Example 1.

### (Example 3)

A pellet was obtained in the same manner as in Example 1 except that the easy stripping agent was changed to a commercially available reagent magnesium stearate. In the same manner as in Example 1, a core was formed from the obtained pellet, and an outer molded body was obtained. The core was dissolved in water, and the outer molded body was sintered to obtain a tubular body as a final sintered body.

In Example 3 as well, no chipping was observed on the inner surface of the finally obtained tubular body made of stainless steel, and the surface quality of the inner surface was smooth, but it was inferior to Example 1.

### (Example 4)

A pellet was obtained in the same manner as in Example 1 except that the easy stripping agent was changed to product name "Electrostripper EA" which is a commercially available lauryl diethanolamine manufactured by Kao Corporation. In the same manner as in Example 1, a core was formed from the obtained pellet, and an outer molded body was obtained. The core was dissolved in water, and the outer molded body was sintered to obtain a tubular body as a final sintered body.

In Example 4 as well, no chipping was observed on the inner surface of the finally obtained tubular body made of stainless steel, and the surface quality of the inner surface was also smooth, but it was inferior to Example 1.

### (Example 5)

A pellet was obtained in the same manner as in Example 1 except that the added ratio of the easy stripping agent was changed to 0.6 wt% of the entire core resin. In the same manner as in Example 1, a core was formed from the obtained pellet, and an outer molded body was obtained. The core was dissolved in water, and the outer molded body was sintered to obtain a tubular body as a final sintered body.

In Example 5 as well, no chipping was observed on the inner surface of the finally obtained tubular body made of stainless steel was not chipped, and the inner surface had a smooth surface, which was very good.

### (Comparative Example 1)

A pellet was obtained in the same manner as in Example 1 except that the added ratio of the easy stripping agent was changed to 0.1 wt% of the entire core resin. In the same manner as in Example 1, a core was formed from the obtained pellet, and an outer molded body was obtained. The core was dissolved in water, and the outer molded body was sintered to obtain a tubular body as a final sintered body.

Partial chipping of the inner surface of the molded body was observed after the core was removed. Therefore, the inner surface of the finally obtained sintered tubular body had partial chipping.

### (Example 6)

A pellet was obtained in the same manner as in Example 1 except that diglycerin as a plasticizer was added in an amount of 3 wt% of the entire resin for core. In the same manner as in Example 1, a core was formed from the obtained pellet, and an outer molded body was obtained. The core was dissolved in water, and the outer molded body was sintered to obtain a tubular body as a final sintered body.

In Example 6 as well, no chipping was observed on the inner surface of the finally obtained tubular body made of stainless steel, and the surface quality of the inner surface was smooth and good.

### (Example 7)

A pellet was obtained in the same manner as in Example 6 except that "Electrostripper TS5" as an easy stripping agent was added in an amount of 0.6 wt% of the entire resin for core. In the same manner as in Example 1, a core was formed from the obtained pellet, and an outer molded body was obtained. The core was dissolved in water, and the outer molded body was sintered to obtain a tubular body as a final sintered body.

In Example 7, no chipping was observed on the inner surface of the finally obtained tubular body made of stainless steel, and the surface quality of the inner surface was smooth and good.

### (Example 8)

A pellet was obtained in the same manner as in Example 6 except that diglycerin as a plasticizer was added in an amount of 5 wt% of the entire resin for core. In the same manner as in Example 1, a core was formed from the obtained pellet, and an outer molded body was obtained. The core was dissolved in water, and the outer molded body was sintered to obtain a tubular body as a final sintered body.

In Example 8, no chipping was observed on the inner surface of the finally obtained tubular body made of stainless steel, and the surface quality of the inner surface was smooth and good.

### (Example 9)

A pellet was obtained in the same manner as in Example 6 except that the addition amount of diglycerin as a plasticizer was changed to 6 wt% of the entire resin for core. In the same manner as in Example 1, a core was formed from the obtained pellet, and an outer molded body was obtained. The core was dissolved in water, and the outer molded body was sintered to obtain a tubular body as a final sintered body.

In Example 9 as well, no chipping was observed on the inner surface of the tubular body made of stainless steel finally obtained, and the surface quality of the inner surface was smooth. However, there was surface fogging, which is considered to be due to thermal damage the core received when the stainless-steel clay for sintering was molded. Although there seems to be no problem in practical use, it could not be said that the tubular body was in a good state.

### (Example 10)

A pellet was obtained in the same manner as in Example 1 except that glycerin as a plasticizer was added in an amount of 3 wt% of the entire resin for core. In the same manner as in Example 1, a core was formed from the obtained pellet, and an outer molded body was obtained. The core was dissolved in water, and the outer molded body was sintered to obtain a tubular body as a final sintered body.

In Example 10, no chipping was observed on the inner surface of the finally obtained tubular body made of stainless steel, and the surface quality of the inner surface was smooth and good.

### (Example 11)

A pellet was obtained in the same manner as in Example 1 except that trimethylolpropane (TMP) as a plasticizer was added in an amount of 3 wt% of the entire resin for core. In the same manner as in Example 1, a core was formed from the obtained pellet, and an outer molded body was obtained. The core was dissolved in water, and the outer molded body was sintered to obtain a tubular body as a final sintered body.

In Example 11, no chipping was observed on the inner surface of the finally obtained tubular body made of stainless steel, and the surface quality of the inner surface was smooth and good.

### (Comparative Example 2)

As polyvinyl alcohols, the following two kinds of polyvinyl alcohols a) and b) were used in combination in the following proportions.
a) Product name "SELVOL 205" manufactured by Sekisui Specialty Chemicals America, LLC., saponification degree 89%, polymerization degree 500 to 800, 48.2 wt% of the entire resin for core.
b) Product name "SELVOL 310" manufactured by Sekisui Specialty Chemicals America, LLC., saponification degree 98%, polymerization degree 1000 to 1200, 48.1 wt% of the entire resin for core.

A pellet was obtained in the same manner as in Example 1 except for the above. In the same manner as in Example 1, a core was formed from the obtained pellet to obtain an outer molded body, and the core was dissolved in water. Then, sintering to obtain a final tubular body was attempted.

However, a chipping was generated on the inner surface in a thin portion of the outer molded body obtained after dissolving the core in warm water. Therefore, the chipping remained even after a sintering process was performed.

### (Comparative Example 3)

A pellet was obtained in the same manner as in Example 1 except that the polyvinyl alcohol was changed to product name "SELVOL 310" manufactured by Sekisui Specialty Chemical America, LLC., saponification degree 98%, polymerization degree 1000 to 1200. In the same manner as in Example 1, a core was formed from the obtained pellet to obtain an outer molded body, and the core was dissolved in water. Then, sintering to obtain a final tubular body was attempted.

However, a plurality of chippings were randomly generated on the inner surface of the outer molded body obtained after the core was dissolved in warm water. Therefore, the plurality of chippings remained even after a sintering process was performed.

### (Comparative Example 4)

A pellet was obtained in the same manner as in Example 1 except that product name "Rikemal OL100" commercially available from Riken Vitamin Co., Ltd. was used as an easy stripping agent in an amount of 0.1 wt% of the entire resin for core. In the same manner as in Example 1, a core was formed from the obtained pellet, an outer molded body was obtained, and the core was dissolved in water. In this case, the inner surface of the obtained outer molded body was not smooth, and chipping was partially generated. Therefore, a sintering process could not be performed.

### (Comparative Example 5)

A pellet was obtained in the same manner as in Example 1 except that magnesium stearate was used as an easy stripping agent in an amount of 0.1 wt% of the entire resin for core. In the same manner as in Example 1, a core was formed from the obtained pellet, an outer molded body was obtained, and the core was dissolved in water. In this case, the inner surface of the obtained outer molded body was not smooth, and chipping was partially generated. Therefore, a sintering process could not be performed.

### (Comparative Example 6)

A pellet was obtained in the same manner as in Example 1 except that product name "Electrostripper EA" manufactured by Kao Corporation, which is commercially available as an antistatic agent, was used as an easy stripping agent in an amount of 0.1 wt% of the entire resin for core. In the same manner as in Example 1, a core was formed from the obtained pellet, an outer molded body was obtained, and the core was dissolved in water. In this case, the inner surface of the obtained outer molded body was not smooth, and chipping was partially generated. Therefore, a sintering process could not be performed.

### (Comparative Example 7)

A pellet was obtained in the same manner as in Example 1 except that product name "SELVOL 707" manufactured by Sekisui Specialty Chemicals America, LLC., saponification degree 72%, polymerization degree 600 to 800 was used as polyvinyl alcohol. In the same manner as in Example 1, a core was formed from the obtained pellet to obtain an outer molded body. However, the core was deformed by heat at the time of processing the outer molded body. Therefore, the subsequent steps were not performed.

### (Comparative Example 8)

A pellet was obtained in the same manner as in Example 1 except that the added ratio of the easy stripping agent was changed to 1.2 wt% of the entire resin for core. In the same manner as in Example 1, a core was formed from the obtained pellet, and an outer molded body was obtained. The core was dissolved in water, and the outer molded body was sintered to obtain a tubular body as a final sintered body.

Partial distortion and deformation of the inner surface of the molded body were observed after the core was removed. Therefore, in the finally obtained sintered tubular body, the inner surface was distorted or deformed in part.

### (Comparative Example 9)

An attempt was made to obtain a pellet in the same manner as in Example 1, except that product name "SELVOL 513" manufactured by Sekisui Specialty Chemical Co., Ltd., saponification degree 89%, polymerization degree 1200 to 1500 was used as polyvinyl alcohol, but the pellet shape was irregular and the surface became gnarly. Although it was attempted to form a core from the pellet in this state in the same manner as in Example 1, the shape of the core itself was not uniform, then it was judged to be unsuitable for forming an outer molded body, and the process was stopped.

The compositions and evaluation results of the resins for core of Example 1 to 11 and Comparative Example 1 to 9 are collectively shown in the following Tables 1 and 2.

The unit of the blending ratio in Tables 1 and 2 is all wt%. The viscosity at 4 wt% (cps) is a viscosity of an aqueous solution of polyvinyl alcohol having a concentration of 4 wt% at 23°C.

**[Table 1]**

| Raw material | | Saponification degree | Polymerization degree | MFR | Viscosity at 4 wt% (cps) | Ex. 1 | Ex. 2 | Ex. 3 | Ex. 4 Ex. 5 | | Ex. 6 | Ex. 7 | Ex. 8 | Ex. 9 | Ex. 10 | Ex. 11 |
|---|---|---|---|---|---|---|---|---|---|---|---|---|---|---|---|---|
| Polyvinyl alcohol | SELVOL205 | 89 | 500~800 | 3.5 | 5.2-6.2 | 99.3 | 99.3 | 99.3 | 99.3 | 99 | 96.3 | 96 | 94.3 | 93.3 | 96.3 | 96.3 |
| | SELVOL310 | 98 | 1000~1200 | 1.0 | 9.0-11.0 | | | | | | | | | | | |
| | SELVOL707 | 72 | 600~800 | 8.5 | 6.0-7.5 | | | | | | | | | | | |
| Plasticizer | Diglycerin | | | - | | 0 | 0 | 0 | 0 | 0 | 3 | 3 | 5 | 6 | 0 | 0 |
| | Glycerin | | | - | | 0 | 0 | 0 | 0 | 0 | 0 | 0 | 0 | 0 | 3 | 0 |
| | TMP | | | - | | 0 | 0 | 0 | 0 | 0 | 0 | 0 | 0 | 0 | 0 | 3 |
| Antioxidant | Irganox3114 | | | - | | 0.2 | 0.2 | 0.2 | 0.2 | 0.2 | 0.2 | 0.2 | 0.2 | 0.2 | 0.2 | 0.2 |
| | Irgafos168 | | | - | | 0.2 | 0.2 | 0.2 | 0.2 | 0.2 | 0.2 | 0.2 | 0.2 | 0.2 | 0.2 | 0.2 |
| Easy stripping agent | TS5 | | | - | | 0.3 | | | | 0.6 | 0.3 | 0.6 | 0.3 | 0.3 | 0.3 | 0.3 |
| | OL100(E) | | | - | | | 0.3 | | | | | | | | | |
| | Magnesium stearate | | | - | | | | 0.3 | | | | | | | | |
| | EA | | | - | | | | | 0.3 | | | | | | | |
| Result | | | | | | ⊚ | △ | △ | | ⊚ | ○ | ○ | ○ | △ | ○ | ○ |

**[Table 2]**

| Raw material | | Saponification degree | Polymerization degree | MFR | Viscosity at 4 wt% (cps) | Comp.Ex.1 | Comp.Ex.2 | Comp.Ex.3 | Comp.Ex.4 Comp. Ex.5 | | Comp.Ex.6 | Comp.Ex.7 | Comp.Ex.8 | Comp.Ex.9 |
|---|---|---|---|---|---|---|---|---|---|---|---|---|---|---|
| Polyvinyl alcohol | SELVOL205 | 89 | 500~800 | 3.5 | 5.2-6.2 | 99.5 | 48.2 | | 99.5 | 99.5 | 99.5 | | 98.4 | |
| | SELVOL310 | 98 | 1000∼1200 | 1.0 | 9.0-11.0 | | 48.1 | 96.3 | | | | | | |
| | SELVOL707 | 72 | 600~800 | 8.5 | 6.0-7.5 | | | | | | | 99.3 | | |
| | SELVOL513 | 89 | 1200~1500 | 0.5 | 13.0-15.0 | | | | | | | | | 99.3 |
| Plasticizer | Diglycerin | | | - | | 0 | 3 | 3 | 0 | 0 | 0 | 0 | 0 | 0 |
| | Glycerin TMP | | | - | | 0 | 0 | 0 | 0 | 0 | 0 | 0 | 0 | 0 |
| | | | | - | | 0 | 0 | 0 | 0 | 0 | 0 | 0 | 0 | 0 |
| Antioxidant | Irganox3114 | | | - | | 0.2 | 0.2 | 0.2 | 0.2 | 0.2 | 0.2 | 0.2 | 0.2 | 0.2 |
| | Irgafos168 | | | - | | 0.2 | 0.2 | 0.2 | 0.2 | 0.2 | 0.2 | 0.2 | 0.2 | 0.2 |
| Easy stripping agent | TS5 | | | - | | 0.1 | 0.3 | 0.3 | | | | 0.3 | 1.2 | 0.3 |
| | OL 100(E) | | | | | | | | 0.1 | | | | | |
| | Magnesium stearate | | | - | | | | | | 0.1 | | | | |
| | EA | | | - | | | | | | | 0.1 | | | |
| Result | | | | | | × | × | × | × | × | × | × | × | × |

The evaluation criteria in Tables 1 and 2 are the presence or absence of chipping on the inner surface and the evaluation criteria for smoothness. They are as follows.

⊚: Particularly good
○: Good
△: Smooth inner surface with no chipping
×: Inner surface with chipping, molded body with deformation or the like, or a sintering process could not be performed.

### EXPLANATION OF SYMBOLS

- 1:: Mold
- 1a, 1b:: Split molds
- 1c:: Injection port
- 2:: Core
- 3:: Molded body
- 3a:: Inner surface
- 4:: Water
- 6:: Tubular body

## Claims

1. A resin for core, comprising a polyvinyl alcohol-based resin, the resin for core being used for an application in which a core is dissolved in water after an outer molded body is molded in an injection molding process,
the resin for core having a polymerization degree of 800 or less, and including an easy stripping agent that enhances easy stripping properties when the resin for core dissolves, in a proportion of more than 0.1 wt% and less than 1.2 wt%.

2. The resin for core according to claim 1, comprising a plasticizer in a proportion of 6.0 wt% or less.

3. The resin for core according to claim 1 or 2, wherein the easy stripping agent is a glycerin fatty acid ester-based compound.

4. The resin for core according to any one of claims 1 to 3, wherein the plasticizer is at least one selected from the group including ethylene glycol, glycerin, diglycerin, and trimethylolpropane.

5. The resin for core according to any one of claims 1 to 4, wherein an aqueous solution of the polyvinyl alcohol-based resin having a concentration of 4 wt% at 23°C has a viscosity of 10 cps or less.

6. The resin for core according to any one of claims 1 to 5, wherein the polyvinyl alcohol-based resin has an MFR of 1.0 g or more and 10.0 g or less at 210°C under a load of 2160 g.

7. The resin for core according to any one of claims 1 to 6, wherein a material of the outer molded body is a metal powder for sintering, and the polyvinyl alcohol-based resin has a saponification degree of 72% or more and 90% or less.
